## Europäisches Patentamt
## European Patent Office
## Office européen des brevets

(19)

(11) Publication number: **0 087 191**
**A1**

(12) **EUROPEAN PATENT APPLICATION**

(21) Application number: **83200226.5**

(22) Date of filing: **11.02.83**

(51) Int. Cl.³: **B 01 D 46/04**

(30) Priority: **12.02.82 NL 8200551**

(43) Date of publication of application:
**31.08.83 Bulletin 83/35**

(84) Designated Contracting States:
**BE CH DE FR GB LI NL**

(71) Applicant: **Machinefabriek "Brabant"D. van Opstal B.V.**
**Gen. Allenweg 2**
**NL-4761 CN Zevenbergen(NL)**

(72) Inventor: **van Opstal, Hein**
**Beethovenlaan 13**
**NL-4837 CH Breda(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **Dust filter.**

(57) A dust filter comprising a cylindrical housing (2) with a conical bottom (3) fitted with an air-supply branch (8) and a sluice-containing discharge branch (9, 10), an upper end comprising an air-discharge channel (13), a horizontal partition (5) in which terminate filter hoses (6) that have a closed bottom end, and in which filter hoses an excess pressure can be periodically produced. According to the invention the housing is subdivided by vertical partitions (11) into compartments, while the chambers (12) formed above the partition communicate each separately through a closable opening (14) with the air discharge channel (13).

FIG.1

EP 0 087 191 A1

0087191

Title: Dust filter

The invention relates to a dust filter comprising a cylindrical housing having a horizontal partition, a conical bottom fitted with a supply branch and a sluice-containing discharge branch, and an upper end comprising an air discharge channel; a plurality of filter hoses arranged in said housing, each having a closed bottom end and an open top discharge end terminating in the horizontal partition; and means for periodically producing an excess pressure in each filter hose.

In operation the dust-laden air is sucked or blown through the cloth of the filter hoses. The dust then sticks to the filter cloth and the cleansed air leaves the filter. For the purpose of regularly cleansing the filter, a powerful blast of air is injected into one or a group of filter hoses, thereby releasing the dust from the filter cloth and discharging the same via the sluice-containing discharge branch disposed in the conical bottom. The dust particles will thereby fall substantially as a compact mass and will hence fall through the upwardly moving air flow. It will be clear that for obtaining a proper efficiency, the influence of the pressure difference produced for the operation of the apparatus will have to be eliminated, since otherwise a particularly low efficiency is obtained. This elimination, however, cannot take place in the known apparatus in connection with the required continuous dust discharge, so that a low efficiency has to be accepted.

Another drawback of the known apparatus is that in case one of the filter hoses becomes defective, the entire installation has to be shut down in order to check which hose is leaking.

It is an object of the invention to remove these drawbacks.

To this effect a dust filter of the above described type is characterized in that the cylindrical housing is divided by vertical partitions into a plurality of compartments, while above the partition there are formed chambers that each individually communicate through a closable opening with the air discharge channel. It thus becomes possible to eliminate the influence of the pressure difference produced in one compartment. Moreover, by providing the blast in one or more filter hoses of a compartment, this will propagate as a kind of pressure wave from the top to the bottom, thereby moving the more or less caked dust layer as a mass in front of it, so that this will fall "through" the intake air.

Centrally in the housing there may be arranged a buffer vessel for the storage of compressed air, comprising a compressed-air supply-line, said buffer vessel being connected at the top to closable lines extending to each of the compartments, the latter lines being fitted with branch lines terminating in the filter hoses. Due to these features, it is achieved that in a short period of time a quantity of compressed air can be supplied to the filter hoses to the required extent and at the required pressure difference, in other words, the influence of the length and the other dimensions of the compressed-air supply-lines is thereby substantially eliminated.

Furthermore, the dust filter may be fitted with control means for successively shutting off the openings between the upper chambers and the air discharge channel, as well as for supplying compressed air to one or more filter hoses of a compartment. Since during the blasting phase the compartment is shut off from the air discharge channel, in casu the suction fan disposed therein, on the one hand there is obtained an extra acceleration of the dust in downward direction, thus reducing the chance of a dust flow towards the "sucking" compartment. On the other hand, by keeping the opening between the upper chambers and the air discharge channel closed for some time after the supply of the compressed air, the blown off dust can fall out of the respective compartment in stationary air.

In a further embodiment of the invention it is also possible to connect the jacket of the cylindrical housing rotatably to the conical bottom, said bottom comprising a partition which separates a portion having the size of one compartment from the other portion of the conical bottom, said portion being connected to a sluice-containing discharge branch. The advantage of this construction is that the compartment to be cleansed is entirely separated from the remaining portion of the apparatus, thus eliminating the influence of the rising air.

In addition to the improvement in efficiency, a major advantage of the apparatus according to the invention is formed in that when one or more filter hoses are defective, it can be rapidly established in which compartment the hose in question is present, after which this compartment can be put out of operation by shutting off the opening between the upper chamber and the air discharge channel. The operation of the other compartments as a result can be continued in a normal manner without allowing more dust to pass the filter.

Some embodiments of the dust filter according to the invention will now be described, by way of example, with reference to the accompanying drawings, in which:

Fig. 1 is a diagrammatic longitudinal section of a dust filter according to the invention;

Fig. 2, on an enlarged scale, shows a part of the cross-section on the line II-II of Fig. 1;

Fig. 3 shows an enlargement of a filter hose applied in the apparatus shown in Figs. 1 and 2; and

Fig. 4 is a cross section similar to Fig. 1 and showing a second embodiment of the dust filter according to the invention.

As shown in the drawings, a dust filter comprises a housing 1 consisting of a circular-cylindrical shell 2, a conical bottom 3 and an upper wall 4. The housing accommodates a horizontal partition 5 having a plurality of openings wherein filter hoses 6 are attached. Centrally in said housing there is provided a compressed-air buffer vessel 7.

The conical bottom 3 comprises a branch 8 for supplying the air to be cleansed. The bottom terminates at the lower end in a branch 10 comprising a rotating sluice 9.

In the circular-cylindrical shell there are further arranged a plurality of vertical radial partitions 11, in the present case six, which divide the annular space wherein the filter hoses 6 are suspended, into a plurality of ring-segment-shaped compartments. Said partitions 11 continue upwardly beyond the partition 5, thus forming upper chambers 12. An air discharge channel 13 links up centrally with the upper wall 4, which channel 13 is separated from the upper chambers 12 by means of a wall 15 comprising valves 14.

The buffer vessel 7 comprises one or more compressed air supply-lines 16 and a plurality of compressed-air discharge-lines 17 corresponding with the number of compartments. The latter lines, each comprising a valve 18, are connected to a plurality of branch lines 19 terminating in the top end of a filter hose.

As shown in Fig. 3, each filter hose comprises a metal wire cage 20 about which there is suspensed a needled felt hose 21. The top ends of the cage and the hose are attached to a ring 22, which by means e.g. of a bayonet catch, is fitted for convenient exchange in a ring 23 disposed in openings in the partition 5.

The operation of the apparatus is as follows.

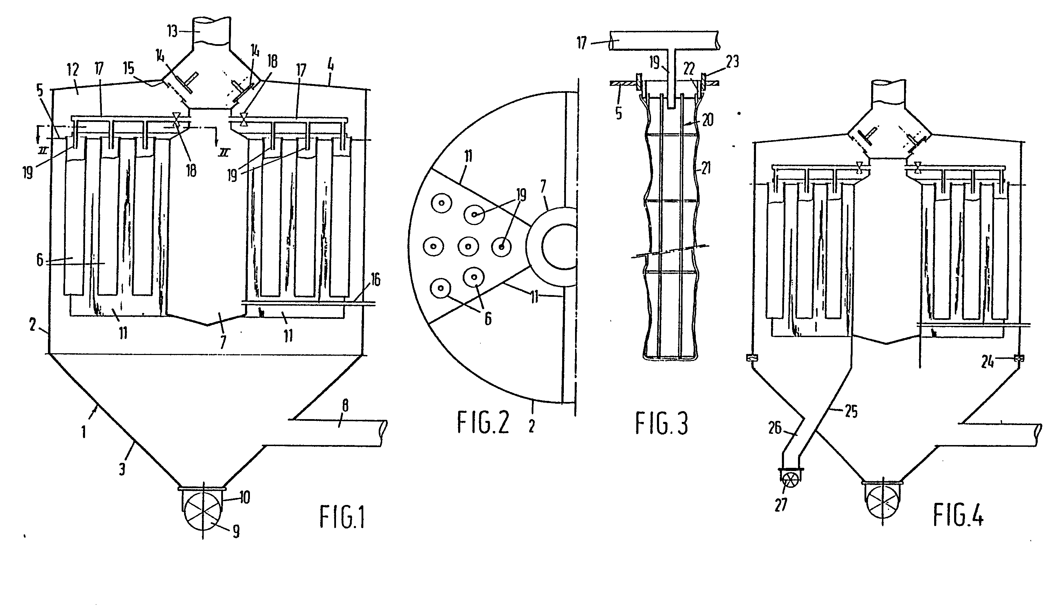

The heavy particles from the air to be cleansed, supplied via the branch 8, will immediately fall (thus arriving in the discharge branch 10), while the dust-contaminated air, under the unfluence of a blower, not shown, arranged in the air discharge channel, e.g. a Roots blower, will move upwardly (see the left-hand portion of Fig. 1). When passing the filter hoses 6, the dust will deposit on the exterior of the hose 21. The air thus cleansed is subsequently discharged to the air discharge channel 13 via the upper chambers 12, and the openings in the wall 15 closable through valves 14.

When such a quantity of dust has deposited on the filter hoses in a given compartment that the operation thereof is inadequate, the valve 14 associated with such compartment is closed (see the right-hand portion of Fig. 1) and the valve 18 in the respective compressed air supply line 17 is opened for a short time. Due to the resulting compressed-air blast, the caked dust layer will become detached from the filter hose and fall onto the conical bottom 3 and be discharged via the rotating sluice 9.

As already stated in the above, on the one hand the subdivision into compartments and on the other hand the generation of a pressure wave achieve that the dust cake to be removed from the filter hoses falls as a more or less compact mass through the upwardly moving, dust-contaminated air.

The control means, not shown, applied to the apparatus according to Fig. 1 are such that each compartment is shut off cyclically from the air discharge channel 13 and the filter hoses in that compartment are cleansed.

The apparatus shown in Fig. 4 differs from that shown in figs. 1-3 only in that the cylindrical shell 2 and the conical bottom 3 are arranged rotatably relative to each other by means of a bearing 24, and in the conical bottom 3 being provided with a partition 25 having a discharge branch 26 comprising the rotating sluice 27. It will be clear that in this construction the conical bottom is stationary in operation and the superimposed cylindrical jacket 2 rotates with the elements arranged therein.

The advantage going with the latter construction consists in that the compartment with the filter hoses to be blown off is completely separated from the remaining portion of the apparatus, so that the influence of ascending contaminated air is entirely eliminated.

It will be clear that a great many modifications are possible without departing from the scope of the invention.

## CLAIMS

1. A dust filter comprising a cylindrical housing having a horizontal partition, a conical bottom fitted with a supply branch and a sluice-containing discharge branch, and an upper end comprising an air discharge channel; a plurality of filter hoses arranged in said housing, each having a closed bottom end and an open top discharge end terminating in the horizontal partition; and means for periodically producing an excess pressure in each filter hose, characterized in that the cylindrical housing is divided by means of vertical partitions into a plurality of compartments, while above the partition there are formed chambers that each separately communicate through a closable opening with the air discharge channel.

2. A dust filter according to claim 1, characterized in that centrally in the housing there is arranged a compressed-air buffer-vessel comprising a compressed-air supply-line, said buffer vessel being connected at the top to closable lines extending towards each of the compartments, said lines comprising branch lines terminating in the filter hoses.

3. A dust filter according to claim 2, characterized by control means for successively shutting off the openings between the upper chambers and the air discharge channel, as well as for supplying compressed air to one or more filter hoses of a compartment.

4. A dust filter according to claim 2 or 3, characterized in that the shell of the cylindrical housing is rotatably connected to the conical bottom and the conical bottom comprises a partition separating a portion having the size of one compartment from the remaining portion of the conical bottom, while a sluice-containing discharge branch is connected to the said portion.

0087191

FIG.1

FIG.2

FIG.3

FIG.4

**0087191**

European Patent
Office

**EUROPEAN SEARCH REPORT**

Application number

EP  83 20 0226

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 426 228  (PROCEDYNE CORPORATION) <br> * Figures 3-5; page 4, line 28 - page 6, line 15 * | 1,3 | B 01 D   46/04 |
| | --- | | |
| A | US-A-3 695 007  (W. FARNWORTH) <br> * Figures 1,3; claims * | 2 | |
| | --- | | |
| A | GB-A-2 044 123  (AIR INDUSTRIE) | | |
| | --- | | |
| A | FR-A-2 425 882  (P. MEYER) | | |
| | --- | | |
| A | FR-A-1 512 109  (DINGLERWERKE A.G.) | | |
| | --- | | TECHNICAL FIELDS SEARCHED (Int. Cl. ³) |
| A | FR-A-  781 022  (STANDARD FILTERBAU) | | B 01 D   46/00 |
| | --- | | |
| A | FR-A-2 209 595  (TORIT CORP.) | | |
| | ----- | | |

The present search report has been drawn up for all claims

| Place of search | Date of completion of the search | Examiner |
|---|---|---|
| THE HAGUE | 20-05-1983 | BOGAERTS M.L.M. |